# EUROPEAN PATENT SPECIFICATION

(11) **EP 2 377 801 B1**
(45) Date of publication and mention of the grant of the patent: **12.06.2013**
(21) Application number: 11161655.3
(22) Date of filing: 08.04.2011
(51) Int. Cl.: B66C 23/36, B65G 63/00

(54) **Method of serving a complex including two and more mobile wharf boom cranes**
Verfahren zum Bedienen eines Komplexes aus zwei oder mehreren mobilen Hafenauslegerkranen
Procédé desservant un complexe incluant deux ou plusieurs grues à flèche de quai mobiles

(30) Priority: 19.04.2010 RU 2010116129
(43) Date of publication of application: 19.10.2011
(73) Proprietor: Zakrytoe Aktsionernoe Obschestvo "SMM", St. Petersburg 190000 (RU)
(72) Inventor: Titberiya, Oleg Ilikovich, 197371, St. Petersburg (RU); Zhuravlev, Alexandr Ivanovich, 188640, Vsevolozhsk (RU); Panshin, Pavel Erikhovich, 197342, St. Petersburg (RU)
(74) Representative: Viering, Jentschura & Partner

(56) References cited:
- WO-A1-01/53175
- WO-A1-2004/074147
- JP-A- 2006 298 524
- US-A- 4 273 244

## Description

### TECHNICAL FIELD

The invention relates to hoisting equipment used for unloading or/and loading cargo from ships to land by the use of portal cranes associated into a complex including two and more mobile wharf boom cranes as well as for additional necessary transportation of other loads in the area of the said complex location.

### BACKGROUND OF THE INVENTION

A portal hoisting crane for handling operations with various cargo including a portal, a rotary support, a vertical tower with a cap, a counterpoising consol and a boom having a boom crab and a load-handling device, the counterpoising consol and the boom fastened horizontally to the tower, as well as carriers is known (see, for example, patent application RU 94012427). The portal comprises a central supporting portion and four support columns rounded at the top end, wherein each of them is connected to the central supporting portion by a vertical hinge and a rod of adjusted length. The support columns are connected pairwise by longitudinal beams on which platforms for arrangement of ballast are mounted. For the carriers to be connected to the ends of the support columns are provided with cheeks connected to the first ends of clips by pins, wherein the second ends of the clips connect by pins the balancers of the carriers.

A method and a system for cargo handling relating to wharf transferring systems are known (see, for example, RU 2384510 or WO 01/53175). The system of a terminal for unloading cargo from and loading cargo onto ships like container ships comprises the first quay adapted to moor container ship and at least one first cargo transferring device adjacent to said first quay and capable of transferring cargo from and/or to said container ship respectively to and/or from a transitional buffer zone adjacent to the first quay for temporarily storing the cargo and at least one second cargo transferring device for transferring cargo from and/or to the buffer zone respectively to and/or from a terminal structure for storing the cargo. The transitional buffer zone comprises a dock, which substantially extends between the first quay and at least one second quay of the terminal structure, and which is adapted to receive the second cargo transferring device. The second cargo transferring device is made as a floating device adapted to accept cargo and float between the first and second quays. Having the advantages, the said invention being implemented requires a large quantity of expensive cargo handling equipment and its use during loading and unloading works should be economically sound, but this is not achievable every time.

### SUMMARY OF THE INVENTION

The task of the applied invention is to ensure cost-effective usage of expensive cargo handling equipment throughout loading and unloading works in maritime and river ports as well as in the industrial enterprises.

Technical result of the present invention provides the service in the form of necessary relocations of all mobile wharf boom cranes included into the complex as well as in the form of transportation of other cargo by the use of one autonomous pneumatic-tired relocating device belonging to a base-platform of one of the mobile wharf boom cranes included into the complex.

The said technical result is obtained by that in order to serve the whole complex comprising two and more mobile wharf boom cranes, each of them comprises a boom crane aggregate including a boom, a tower, a rotating platform with the power units and actuating mechanisms set thereon, as well as the base-platform being supported by shoes of a hinged outrigger system or by shoes of an extendable outrigger system, the base-platform of the one mobile wharf boom crane is made composite and comprises a support frame of a metalware with the boom crane aggregate placed thereon, wherein the base-platform is adapted to accommodate the autonomous pneumatic-tired relocating device under the support frame of the metalware of the base-platform, wherein the base-platform of other cranes included into the complex is made in the form of the same support frame of the metalware as for the first crane, wherein necessary relocations of all the mobile wharf boom cranes included into the complex are carried out by the use of the said autonomous pneumatic-tired relocating device using its ability to drive up and to be disposed under the base-platform of the relevant mobile wharf boom crane, wherein its load-bearing capacity is used for additional necessary transportation of other cargo as well.

The use of autonomous pneumatic-tired relocating mechanisms for relocation of heavy cargo is known, see, for example, the site www.scheuerle.com presenting a Scheuerle Fahrzeugfabrik GmbH production including carriers, platforms and trailers. The site www.szdf.com presents a similar Suzhou Dafang Special Purpose Vehicle Manufacturing Cj.,LTD production. However the said special transportation means are separate means with special purposes and not used in combination with the mobile wharf boom cranes and even cannot be used.

The applied method of serving the complex including two and more mobile wharf boom cranes allows significantly reduce direct costs for expensive cargo handling equipment purchase, because each mobile wharf boom crane not including autonomous pneumatic-tired relocating device costs less initially and executes the same activity during the exploitation. Further, the said method does not need any additional cargo carrier for other necessary cargo transportation.

### BRIEF DESCRIPTION OF THE DRAWINGS

Fig. 1 shows schematically a complex including four mobile wharf boom cranes;

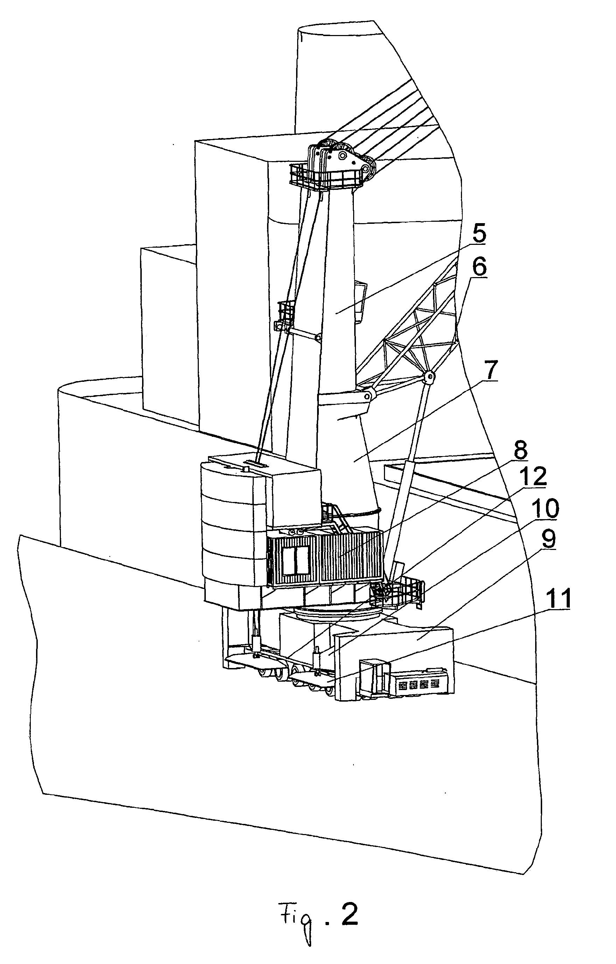

Fig. 2 shows a mobile wharf boom crane comprising an autonomous pneumatic-tired relocating device;

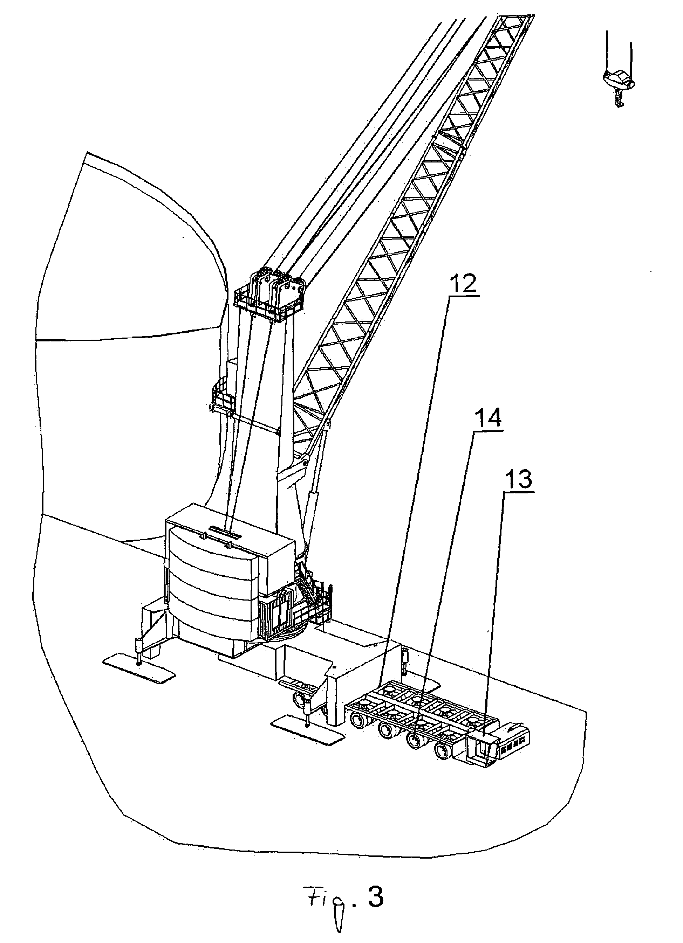

Fig. 3 shows a mobile wharf boom crane with a composite base-platform;

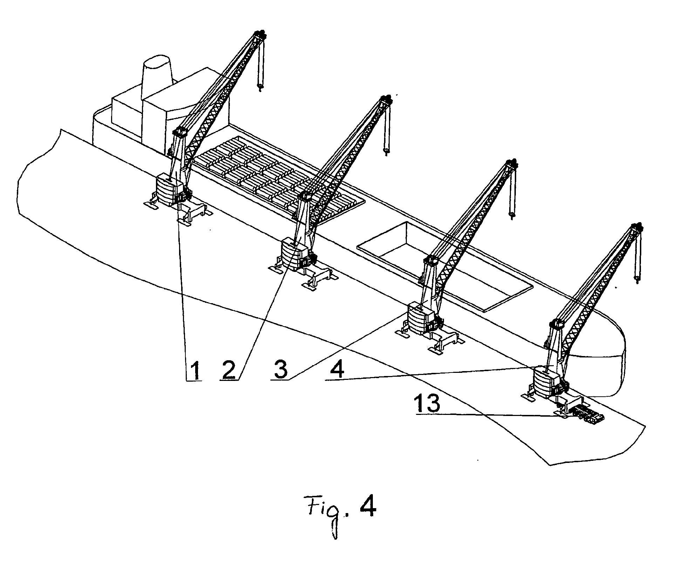

Fig. 4 shows the complex at the moment of an autonomous pneumatic-tired relocating device of the first crane working with the fourth crane;

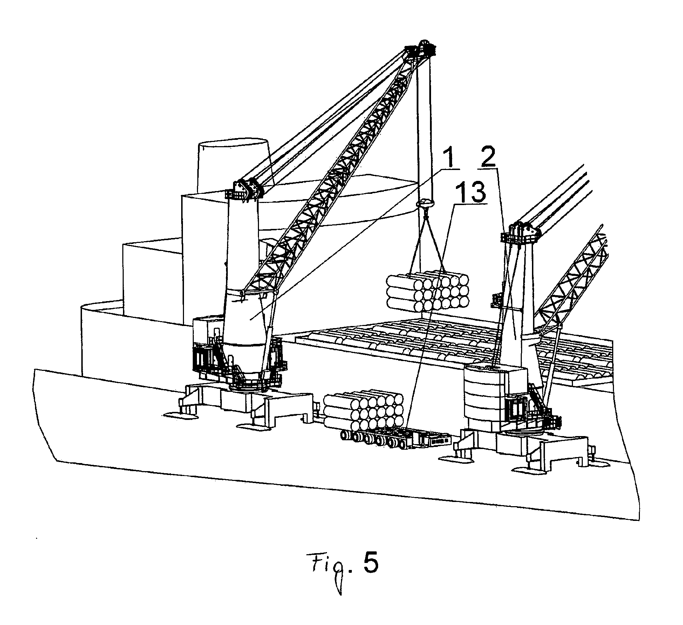

Fig. 5 shows the complex at the moment of an autonomous pneumatic-tired relocating device working as a carrier of other necessary cargo.

### DETAILED DESCRIPTION

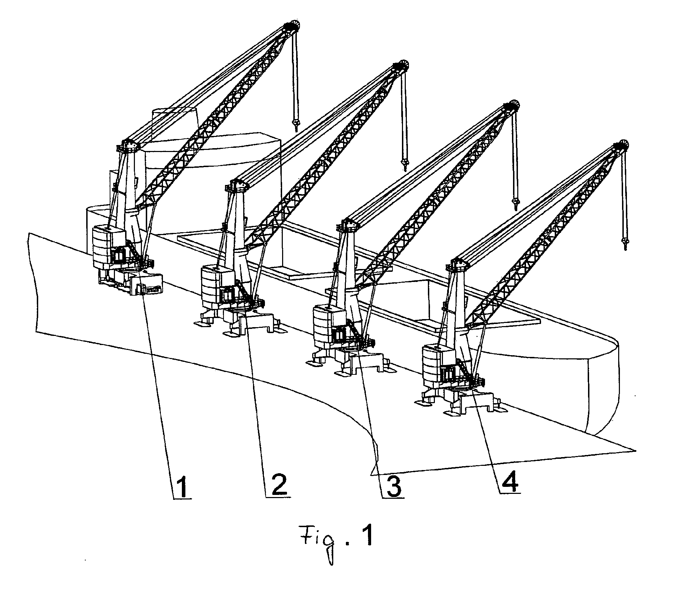

The applied method concerns serving a complex including two and more mobile wharf boom cranes, for example, as shown in Fig. 1, four mobile wharf boom cranes 1, 2, 3, 4. Each crane comprises a boom crane aggregate 5 including a boom 6, a tower 7, a rotating platform 8 with the power units and actuating mechanisms set thereon, as well as the base-platform 9 being supported by shoes 11 by the use of an outrigger system 10. The base-platform 9 of one of the mobile wharf boom cranes 1, 2, 3, 4, for example, of the crane 1, is made composite and comprises a support frame 12 of a metalware with the boom crane aggregate 5 placed thereon, wherein the base-platform 9 is adapted to accommodate the autonomous relocating device 13 having pneumatic-wheeled mover 14 under the support frame 12 of the metalware of the base-platform 9. The remaining cranes 2, 3, 4 do not have their "own" autonomous relocating device 13 having pneumatic-wheeled mover 14, and their base-platform 9 is made in the form of the support frame 12 of the metalware identical to the frame of the first crane 1.

During the exploitation of the whole complex by the use of the applied method the service is carried out as following: necessary relocations of all the mobile wharf boom cranes 1, 2, 3, 4 included into the complex are carried out with the said autonomous relocating device 13 having pneumatic-wheeled mover 14 using its capability to drive up and to be disposed under the base-platform 9 of the relevant mobile wharf boom crane 1 or 2 or 3 or 5, wherein additional necessary transportation of other cargo is carried out by the use of its load-bearing capacity, i.e. it is used as an independent cargo transport.

## Claims

1. Method of serving a complex including two and more mobile wharf boom cranes (1, 2, 3, 4), wherein each crane comprises a boom crane aggregate (5) including a boom (6) a tower (7), a rotating platform (8) with power units and actuating mechanisms set thereon, as well as a base-platform (9) being supported by shoes (11) of a hinged outrigger system or by shoes of an extendable outrigger system (10), **characterized in that** the base-platform (9) of one mobile wharf boom crane is made composite and comprises a support frame (12) of a metalware with the boom crane aggregate placed thereon, wherein the base-platform (9) is adapted to accommodate the autonomous pneumatic-tired relocating device (14) under the frame (12) of the metalware of the base-platform (9), wherein the base-platform (9) of the other cranes included into the complex is made in the form of the same support frame (12) of the metalware as for the first crane, wherein necessary relocations of all the mobile wharf boom cranes included into the complex are carried out by the use of the said autonomous pneumatic-tired relocating device (14) using its capability to drive up and to be disposed under the base-platform (9) of the relevant mobile wharf boom crane, wherein its load-bearing capacity is used for additional necessary transportation of other cargo as well.

## Patentansprüche

1. Verfahren zum Bedienen eines Komplexes aufweisend zwei oder mehrere mobile Hafen-Auslegerkrane (1, 2, 3, 4), wobei jeder Kran aufweist ein Auslegerkran-Aggregat (5) aufweisend einen Ausleger (6), einen Turm (7), eine Drehplattform (8), auf der Leistungseinheiten und Aktuator-Mechanismen angeordnet sind, sowie eine Basisplattform, die mittels Füßen (11) eines Gelenk-Abstützsystems oder mittels Füßen eines ausfahrbaren Abstützsystems (10) abgestützt ist, **dadurch gekennzeichnet, dass** die Basisplattform (9) von einem der mobilen Hafen-Auslegerkrane als Komposit hergestellt ist und aufweist einen Stützrahmen (12) aus einer Metallware, auf dem das Auslegerkran-Aggregat platziert ist, wobei die Basisplattform (9) eingerichtet ist, um die autonome, pneumatisch-bereifte Umzugsvorrichtung (14) unter dem Stützrahmen (12), der aus der Metallware ist, der Basisplattform (9) aufzunehmen, wobei die Basisplattform (9) der anderen Krane, die in dem Komplex enthalten sind, mit der gleichen Form des Stützrahmens (12), der aus der Metallware ist, wie sie der erste Kran hat, hergestellt sind, wobei alle notwendigen Umzüge aller mobilen Hafen-Auslegerkrane, die in dem Komplex enthalten sind, mittels der Benutzung der autonomen, pneumatisch-bereiften Umzugsvorrichtung (14) durchgeführt werden unter Benutzung der Fähigkeit davon, zu der Basisplattform hinzufahren und unter der Basisplattform (9) des relevanten mobilen Hafen-Auslegerkrans angeordnet zu sein, wobei die Last-Trag-Kapazität davon auch benutzt wird für den zusätzlich notwendigen Transport von anderer Fracht.

## Revendications

1. Procédé pour desservir un complexe comprenant au moins deux grues à flèche de quai mobiles (1, 2, 3, 4), dans lequel chaque grue comprend un ensemble de grue à flèche (5) comprenant une flèche (6), une tour (7), une plateforme rotative (8) avec des ensembles d'unités de puissance et de mécanismes d'actionnement sur cette dernière, ainsi qu'une plateforme de base (9) qui est supportée par des semelles (11) d'un système porteur articulé ou par des semelles d'un système porteur extensible (10), **caractérisé en ce que** la plateforme de base (9) d'une grue à flèche de quai mobile est rendue composite et comprend un bâti de support (12) en métal avec l'ensemble de grue à flèche placé sur ce dernier, dans lequel la plateforme de base (9) est adaptée pour loger le dispositif de repositionnement à pneumatique autonome (14) sous le bâti de support (12) en métal de la plateforme de base (9), dans lequel la plateforme de base (9) des autres grues comprises dans le complexe est réalisée sous la forme du même bâti de support (12) en métal comme pour la première grue, dans lequel les repositionnements nécessaires de toutes les grues à flèche de quai mobile comprises dans le complexe sont réalisés à l'aide dudit dispositif de repositionnement à pneumatique autonome (14), en utilisant sa capacité à arriver et à être disposé sous la plateforme de base (9) de la grue à flèche de quai mobile appropriée, dans lequel sa capacité porteuse est utilisée pour le transport nécessaire supplémentaire d'autres marchandises.
